# EUROPÄISCHE PATENTSCHRIFT

(11) **EP 2 299 562 B1**
(45) Veröffentlichungstag und Bekanntmachung des Hinweises auf die Patenterteilung: **04.07.2012**
(21) Anmeldenummer: 09170434.6
(22) Anmeldetag: 16.09.2009
(51) Int. Cl.: H02K 5/22, H02K 5/10, H02G 3/08, F16L 5/02

(54) **Dichtungsvorrichtung für Kabeldurchgang im Klemmenkasten sowie zugehörige elektrische Maschine oder Anlage und zugehöriges Verfahren**
Sealing device for cable passage in connection box and accompanying electric machine or assembly and accompanying method
Dispositif d'étanchéité pour le passage de câbles dans la boîte à bornes et machine ou installation électrique correspondante et procédé correspondant

(43) Veröffentlichungstag der Anmeldung: 23.03.2011
(73) Patentinhaber: Baumüller Nürnberg GmbH, 90482 Nürnberg (DE)
(72) Erfinder: Braun, Joachim, 90411 Nürnberg (DE)
(74) Vertreter: Götz, Georg Alois

(56) Entgegenhaltungen:
- US-A- 5 949 167
- US-A1- 2008 115 955

## Beschreibung

Die Erfindung betrifft eine Dichtungsvorrichtung, ausgebildet zum Abdichten eines Kabeldurchgangs zwischen einem Gehäuse einer elektrischen Maschine oder einer elektrischen Anlage und einem Klemmenkasten, sowie eine zugehörige elektrische Maschine oder Anlage und ein Verfahren zum Abdichten eines Kabeldurchgangs zwischen einem Gehäuse einer elektrischen Maschine und einem Klemmenkasten.

Bei elektrischen Maschinen mit einem Gehäuse und einem separaten Klemmenkasten ist zwischen dem Gehäuse und dem Klemmenkasten ein Kabeldurchgang erforderlich. Durch den freien Raum zwischen dem Klemmenkasten und dem Maschinengehäuse, bei dem es sich beispielsweise um das Gehäuse eines Motors handeln kann, können Kleinteile wie beispielsweise Scheiben in den Maschinenbereich, beispielsweise den Motorinnenraum, fallen bzw. gelangen. Dabei besteht die Gefahr, dass diese Kleinteile im Maschineninnenraum Schäden anrichten. Zum Beispiel ist es möglich, dass beim Anschließen der Klemmen eines Motors diverse Kleinteile unerwünschterweise in den Motorinnenraum und dort beispielsweise in den Bereich der Wicklungen gelangen. Eine definierte Abdichtung eines Kabeldurchgangs im Maschinengehäuse zum Klemmenkasten ist schwierig, da beispielsweise im Fall eines Motors als elektrischer Maschine unterschiedliche Baulängen und Drehzahlen innerhalb einer Baureihe dazu führen, dass unterschiedliche Stromstärken erforderlich sind und somit auch verschieden dicke Kabel aus dem Motorgehäuse in den Klemmenkasten geführt werden müssen.

Bekannt ist die Abdichtung der freien Stellen des Kabeldurchgangs zwischen einem Gehäuse bzw. einem Druckring oder Lagerschild und dem Klemmenkasten mittels einer Flächendichtung, die rechteckig geschlitzt ist. Die Rechteckschlitzung dieser bekannten Flächendichtung ist auf die maximal erforderlichen Kabelquerschnitte ausgelegt. Problematisch ist bei diesen bekannten Abdichtungen, dass beim Durchführen verschieden dicker Kabel durch eine solche rechteckig geschlitzte Flächendichtung größere offene Bereiche entstehen, in die weiterhin Kleinteile hineinfallen bzw. hineingeraten können, die dann gegebenenfalls an der elektrischen Maschine zu Schäden führen können.

Aus der DE 31 42 151 C2 ist eine elektrische Maschine mit einem gesonderten, an deren Gehäuse angebauten Klemmenkasten bekannt, bei der zwischen dem Klemmenkasten und dem Gehäuse eine Dichtungsscheibe eingefügt ist, die eine Durchführungsöffnung für die elektrischen Leitungen aufweist, wobei an der Dichtungsscheibe ein die durchtretenden Leitungen parallel zur Maschinenachse führendes Halteteil vorgesehen ist. An der Dichtungsscheibe kann weiterhin mindestens ein in Achsrichtung der Maschine verlaufender offener Kanal angeformt sein, dessen axiale Öffnung durch eine elastische, an der Dichtungsscheibe angeformte Zunge abgedeckt ist. Die Ausgestaltung der Dichtung mit einem Halteteil parallel zur Maschinenachse bzw. einem Kanal ist jedoch vergleichsweise aufwändig. Bei der Abdeckung von Kanalöffnungen durch von ihrer Grundform her Rechteckschlitzen vergleichbaren Zungen besteht wiederum das Problem, dass sich bei dickeren Kabeln große offene Bereiche ergeben. Eine Anpassung an verschieden dicke Ausführungskabelquerschnitte ist so nicht zu erreichen.
US 5949167 und US 2008/0115955 offenbaren jeweils eine Dichtungsvorrichtung mit den Merkmalen des Oberbegriffs des Anspruchs 1.

Der Erfindung liegt damit die Aufgabe zugrunde, eine im Hinblick auf den Stand der Technik verbesserte Dichtungsvorrichtung, die zum Abdichten eines Kabeldurchgangs zwischen einem Gehäuse einer elektrischen Maschine oder elektrischen Anlage und einem Klemmenkasten ausgebildet ist, anzugeben.

Die erfindungsgemäße Dichtungsvorrichtung, die sich auch als Maschinen- oder Anlagengehäuse-Klemmenkasten-Dichtungsvorrichtung bzw. als bezeichnen ließe, zeichnet sich durch die Merkmale des Kennzeichens von Anspruch 1 aus.

Die Dichtungsvorrichtung zur Abdichtung bzw. zum Abdecken des offenen Bereichs zwischen dem Klemmenkasten und dem Maschinen- bzw. Anlagengehäuse ist somit flächig und geschlitzt, wobei die Schlitze im Unterschied zum Stand der Technik keine Rechtecke beschreiben, sondern so angeordnet sind, dass sich jeweils wenigstens ein Paar von zwei Schlitzen unter einem spitzen Winkel trifft. Die erfindungsgemäße Dichtungsvorrichtung lässt sich auch als Abdeckvorrichtung für eine Kabeldurchführungsöffnung im Gehäuse einer elektrischen Maschine oder auch als Abdeckung für eine entsprechende Öffnung im Klemmenkasten selbst bezeichnen bzw. betrachten. Gegebenenfalls bzw. erforderlichenfalls kann die Flächendichtung eine Vielzahl oder größere Anzahl von Schlitzen aufweisen, die so verlaufen, dass sie sich in einem spitzen Winkel schneiden. Die Schlitze laufen somit zumindest paarweise aufeinander zu und schneiden sich dann in einem Winkel, der im Bereich von 0° bis < 90° liegt. Die Schlitze definieren so (durch das Dichtungsmaterial, das durch die Schlitzungen nur eingeschlitzt, aber im Bereich der Schlitzungen nicht vollständig ausgeschnitten wird,) abgedeckte Öffnungen in der Dichtungsfläche.

Aufgrund des spitzen Winkels, in dem sich die Schlitzpaare treffen, schmiegen sich die durch die Schlitze definierten Abschnitte der flächigen Dichtung, die insbesondere, zumindest im Wesentlichen, die Form von Fingern bzw. Fingerkuppen aufweisen können, enger an das jeweilige durchzuführende Kabel an, als dies bei den bekannten rechteckig angeordneten, sich unter 90°-Winkeln schneidenden Schlitzen der Fall ist. Auf diese Art und Weise kann das Eindringen von Kleinteilen in den Bereich beispielsweise einer Motorwicklung bzw. ins Motorinnere oder in einen anderen Maschinenbereich auch bei unterschiedlich dicken auszuführenden Kabeln zuverlässig verhindert werden. Auch bei mehreren oder verschieden dicken Kabeln werden gleichmäßig kleine Öffnungen in der Dichtungsvorrichtung bzw. der Abdeckung des Maschinengehäuses bzw. des Klemmenkastens erreicht, mit der Folge, dass eine gute Dichtwirkung besteht. Bei einer Vielzahl von durch den Kabeldurchgang zu führenden Leitungen können entsprechend viele Schlitze und/oder Schlitzpaare vorgesehen sein, wobei sich die Schlitze zu mehreren bzw. in Paaren so treffen, dass wenigstens zwei nebeneinander liegende Schlitze dort, wo sie aufeinander treffen, einen spitzen Winkel einschließen, der dann eine Öffnung zur Kabeldurchleitung darstellt.

Bei der erfindungsgemäßen Dichtungsvorrichtung verlaufen wenigstens zwei sich unter einem spitzen Winkel treffende Schlitze zunächst parallel zueinander und laufen dann derart in einem stumpfen Winkel abknicken und aufeinander zu, dass sie eine fingerähnliche Form in der Flächendichtung definieren.

Die Schlitze verlaufen demgemäß zunächst parallel zueinander, vergleichbar den zumindest im Wesentlichen parallel verlaufenden Linien, die die Außenkonturen eines Fingers im Bereich des ersten und zweiten Fingergliedes beschreiben. Danach knicken die Schlitze in einem stumpfen Winkel in eine Richtung aufeinander zu ab, d. h., die Schlitze bewegen sich nach dem Abknicken mit einem Winkel, der größer 90° und kleiner als 180° ist, aufeinander zu, vergleichbar der Form des dritten Fingergliedes bzw. dem Bereich der Fingerkuppen bei einem Finger. Auf diese Art und Weise werden in der Flächendichtung insgesamt eine oder mehrere fingerähnliche Schlitzungen definiert bzw. fingerähnliche Ausschnitte und/oder Abschnitte abgegrenzt, die Öffnungen beschreiben, durch die die Kabel vom Klemmenkasten zum Inneren des Maschinengehäuses oder Anlagengehäuses hindurchgeführt werden können. Dieses "Fingerdesign" der Schlitze erlaubt es, auch in dem Fall, dass mehrere oder verschieden dicke Kabel durch den Kabeldurchgang hindurchzuleiten sind, gleichmäßig kleine Öffnungen mit einer guten Dichtwirkung zu realisieren.

Die Dichtungsvorrichtung kann eine Mehrzahl von Schlitzen aufweisen, die wenigstens abschnittsweise und/oder zum Teil parallel zueinander verlaufen, und/oder die Dichtungsvorrichtung kann eine Mehrzahl von Schlitzen derart aufweisen, dass durch wenigstens einen Teil der Schlitze mehrere, insbesondere zwei bis zwanzig, parallel und/oder direkt aneinander angrenzende und/oder in entgegen gesetzte Richtungen verlaufende und/oder ineinander eingreifende fingerähnliche Formen in der Flächendichtung definiert werden.

Dementsprechend ist es möglich, dass in der Flächendichtung eine Vielzahl von Schlitzen vorgesehen ist, wobei die Schlitze so angeordnet sind, dass dadurch mehrere Abschnitte im "Fingerdesign" bzw. mit einer fingerähnlichen Grundform in der Flächendichtung abgegrenzt bzw. definiert werden. Beispielsweise können zwei, drei oder auch zehn, fünfzehn oder zwanzig einzelne Finger in der Dichtungs- bzw. Abdeckvorrichtung durch die Schlitze eingeschnitten werden und jeweils dazu dienen, ein oder mehrere Kabel vom Klemmenkasten zur elektrischen Maschine zu führen oder umgekehrt. Die Finger können im Rahmen der Erfindung beispielsweise so angeordnet sein, dass die Bereiche, die in Analogie zu einem anatomischen Finger als die ersten beiden Fingerglieder zu bezeichnen wären, durch ausschließlich oder wenigstens teilweise durch parallel verlaufende Schlitze gebildet werden, so dass bei mehreren Fingern die Finger oder zumindest ein Teil der Finger mit Ausnahme der vorderen Bereiche, in denen sich die Schlitze in einem spitzen Winkel schneiden, parallel zueinander angeordnet sind. Insbesondere ist es auch denkbar, dass die Finger teilweise gegenüberliegend angeordnet sind, und zwar derart, dass bei direkt aneinander grenzenden parallelen Fingern, die in dieselbe Richtung weisen, der Kuppenbereich eines gegenüberliegenden Fingers, der im Vergleich zu den ersten beiden Fingern in eine entgegen gesetzte Richtung weist, in den Zwischenraum zwischen den beiden direkt aneinander bzw. nebeneinander liegenden Fingern der anderen Seite eingreift. So wird der in der Flächendichtung zur Verfügung stehende Platz optimal genutzt.

Wenigstens zwei sich unter einem spitzen Winkel treffende Schlitze können einen Winkel von, zumindest im Wesentlichen, 53°, einschließen, und/oder wenigstens zwei sich unter einem spitzen Winkel treffende Schlitze können einen derartigen Winkel einschließen, dass das oder die Kabel seitlich positionierbar sind.

Im Rahmen der vorliegenden Erfindung hat sich insbesondere ein spitzer Winkel im Bereich von exakt bzw. etwa 53° als vorteilhaft erwiesen, um eine optimale Abdeckung des offenen, als Kabeldurchgang vorgesehenen Bereichs zwischen dem Gehäuse der elektrischen Maschine und dem Klemmenkasten zu erreichen. Durch den spitzen Winkel im Bereich von etwa 53°, wobei selbstverständlich auch Winkel von der Erfindung erfasst werden, die beispielsweise näher bei etwa 50° oder eher bei 55° liegen, schmiegen sich die in der Flächendichtung ausgebildeten Finger enger ans Kabel an als dies bei rechteckigen Schlitzungen, also bei Schlitzen mit einem 90°-Winkel im vorderen Bereich, der Fall wäre. Spitze Winkel ermöglichen zudem eine seitliche Positionierung der Ausführungsleitungen, da die Finger beim Bewegen der Kabel durch die Winkelverhältnisse der Schlitzungen selbsttätig auf- und zugehen, also die Öffnungen einerseits zur gerichteten Kabeldurchführung genutzt werden können, während andererseits dennoch eine optimale Abdichtung gegeben ist, wobei ein Verhaken an den Kabeln durch den kleineren spitzen Winkel vermieden wird. Dies stellt einen erheblichen Vorteil im Vergleich zu herkömmlichen Dichtungen mit rechteckigen Schlitzungen dar, ohne dass der Aufwand zur Herstellung der Dichtungen in unerwünschter Weise erhöht würde.

Die Dichtungsvorrichtung kann aus Kautschuk, insbesondere aus Zellkautschuk, vorzugsweise in Neoprenequalität, bestehen. Selbstverständlich ist gegebenenfalls für spezifische Anwendungen auch die Verwendung anderer Materialien, insbesondere anderer Zellkautschukqualitäten, denkbar. Besonders vorteilhaft für die Anwendung im Zusammenhang mit Motoren als elektrischen Maschinen ist jedoch die Verwendung von Zellkautschuk in der Qualität CR2 auf Neoprenebasis für die Flächendichtung.

Die Dichtungsvorrichtung kann selbstklebend, insbesondere einseitig selbstklebend, und/oder für Montagezwecke und/oder mit einer Dicke von einigen Millimetern, insbesondere mit einer Dicke von vier Millimetern, ausgebildet sein.

Es bietet sich insbesondere eine einseitig selbstklebende Flächendichtung an, die durch die Klebbeschichtung besonders einfach montiert bzw. im Bereich des Kabeldurchgangs befestigt werden kann. Die Flächendichtung lässt sich dann bei entsprechend geeigneter größenmäßiger Ausbildung beispielsweise einfach über eine Kabeldurchgangsöffnung im Motorgehäuse kleben. Selbstverständlich sind aber ebenso Dichtungsvorrichtungen denkbar, bei denen andere Befestigungsarten vorgesehen sind, beispielsweise eine Befestigung durch Einklippen, Anklemmen bzw. durch Schrauben und dergleichen. Gegebenenfalls können auch mehrere Befestigungsmöglichkeiten in Kombination miteinander zum Einsatz kommen, insbesondere, wenn in kritischen Einsatzbereichen besonders zuverlässig verhindert werden muss, dass Kleinteile in den Bereich der elektrischen Maschine gelangen, da sie dort beispielsweise beträchtliche Schäden anrichten könnten. Eine für die Anwendung bei Motoren besonders geeignete Dicke der flächigen Dichtung ist eine Dicke von einigen Millimetern, insbesondere eine Dicke im Bereich von etwa vier Millimetern. Für andere elektrische Maschinen bzw. im Zusammenhang mit spezifischen Schaltschränken/Klemmenkästen können aber, insbesondere im Hinblick auf die durchzuführenden Kabel, auch hiervon deutlich abweichende Dicken vorzuziehen sein, die selbstverständlich ebenso in den Bereich der Erfindung fallen.

Die Flächendichtung kann eine Höhe im Bereich von einigen zehn Millimetern und/oder eine Breite im Bereich von einhundert bis einhundertfünfzig Millimetern aufweisen und/oder im Fall einer durch wenigstens zwei Schlitze definierten fingerähnlichen Form kann sich die fingerähnliche Form zumindest in etwa, über ein Drittel bis zur Hälfte der Höhe der Flächendichtung erstrecken.

Eine im Zusammenhang mit dem Kabeldurchgang zwischen einem Elektromotor und dem zugehörigen Klemmenkasten erfindungsgemäß verwendete Dichtung weist beispielsweise eine Höhe von sechsundvierzig Millimetern bei einer Breite von einhundertachtundzwanzig Millimetern auf. Der Bereich, in dem die Schlitze bei diesem Ausführungsbeispiel einer Abdeckung für einen Kabeldurchgang bei einem Motor parallel verlaufen, ist jeweils acht Millimeter lang, während der Bereich, in dem sie schräg aufeinander zulaufen, um sich einem spitzen Winkel zu treffen, in diesem Ausführungsbeispiel etwa einen Zentimeter lang ist. Dies ist selbstverständlich nur ein Beispiel und in Abhängigkeit von der Dicke und/oder der Anzahl der Kabel, die zwischen dem Klemmenkasten und dem Gehäusebereich der elektrischen Maschine zu führen sind, können selbstverständlich auch andere Größen der Flächendichtung insgesamt bzw. andere Größen der Schlitzungen bzw. Finger der Dichtung vorgesehen sein.

Die Flächendichtung kann eine, zumindest im Wesentlichen, rechteckige Grundform, insbesondere eine rechteckige Grundform mit wenigstens einer abgerundeten und/oder abgeschnittenen Ecke, und/oder wenigstens eine Ausnehmung und/oder Öffnung, insbesondere wenigstens eine, zumindest im Wesentlichen, runde Ausnehmung und/oder Öffnung aufweisen. Dabei ist die Form der Flächendichtung selbstverständlich so zu wählen, dass eine möglichst vollständige Abdeckung des Kabeldurchgangsbereichs zwischen dem Klemmenkasten und dem Maschinen- oder Anlagengehäuse gegeben ist. Oft bieten sich hierfür z.B. angepasst an entsprechende Maschinengehäuseöffnungen rechteckige Grundformen an, bei denen gegebenenfalls einzelne Ecken abgerundet sind bzw. bei denen im Eckbereich die Kanten abgetrennt/abgeschnitten sind. Zusätzlich zu den Schlitzungen für den Kabeldurchgang können in der flächigen Abdichtung weitere Öffnungen bzw. Ausnehmungen vorhanden sein, insbesondere eine mittige runde Öffnung. Die fest vorgegebenen Ausnehmungen bzw. Öffnungen können zur Durchführung von Kabeln vorab bekannter Größen, die beispielsweise bei Maschinen einer bestimmten Baureihe grundsätzlich vorhanden sind, bzw. für Kabelstränge oder sonstige, standardmäßig durchzuführende Elemente passend ausgelegt sein, so dass trotz der dann in der Dichtungsfläche permanent vorhandenen Öffnung bzw. Ausnehmung nicht die Gefahr besteht, dass Kleinteile unerwünschterweise in den Maschinengehäusebereich gelangen.

Erfindungsgemäß kann die Flächendichtung (beispielsweise als Dichtung für eine Kabeldurchgangsöffnung in einem Motorgehäuse) zusammen mit einer erforderlichen Dichtung für einen bzw. den zugehörigen Klemmenkasten ausstanzbar sein. Auf diese Art und Weise lässt sich Material nutzen, das bisher im Regelfall weggeworfen wurde. Für die erfindungsgemäße Dichtungsvorrichtung ist dann kein Mehraufwand an Material erforderlich ist.

Darüber hinaus betrifft die Erfindung eine elektrische Maschine, insbesondere einen Motor, und/oder eine elektrische Anlage, jeweils mit einem Gehäuse, einem Klemmenkasten und einem Kabeldurchgang zwischen dem Gehäuse und dem Klemmenkasten sowie einer Dichtungsvorrichtung, die zum Abdichten des Kabeldurchgangs ausgebildet ist, insbesondere mit einer Dichtungsvorrichtung wie vorstehend beschrieben, wobei sich die elektrische Maschine bzw. elektrische Anlage durch die Merkmale des Kennzeichens von Anspruch 8 auszeichnet.

Die Maschine bzw. die Anlage weisen zumindest ein Gehäuse, einen Klemmenkasten, beispielsweise in einer Schalteinrichtung, und einen Kabeldurchgang zwischen dem Gehäuse der Maschine bzw. Anlage und dem zugehörigen separaten Klemmenkasten sowie eine Dichtungsvorrichtung auf, die als Klemmenkasten-Gehäuse-Dichtungsvorrichtung wie bereits geschrieben derart ausgebildet ist, dass sie bei einer flächigen Grundgestaltung Schlitze aufweist, die sich wenigstens teilweise unter einem spitzen Winkel, beispielsweise einem Winkel zwischen 50° und 55° treffen, wobei die Schlitze mit besonderem Vorteil so, dass eine fingerartige Form ("Fingerdesign") entsteht.

Diese Art einer Dichtung und/oder Abdeckung mit einer Durchführmöglichkeit für Kabel hat den Vorteil, dass auch bei mehreren bzw. verschieden dicken Kabeln gleichmäßig kleine Öffnungen entstehen, da sich die durch die Schlitze definierten "Finger" enger an die hindurch zu führenden Kabel anlegen, als dies bei Schlitzungen im Rechteckdesign, die bisher Verwendung finden, der Fall wäre. Desweiteren lassen sich die Kabel beim Hindurchführen durch die Fingeröffnungen seitlich positionieren. Hinsichtlich der weiteren Eigenschaften der Dichtungsvorrichtung der elektrischen Maschine bzw. Anlage wird auf die vorhergehende Beschreibung verwiesen.

Desweiteren betrifft die Erfindung ein Verfahren zum Abdichten eines Kabeldurchgangs zwischen einem Gehäuse einer elektrischen Maschine oder einer elektrischen Anlage und einem Klemmenkasten mittels einer Dichtungsvorrichtung, insbesondere mittels einer Dichtungsvorrichtung wie vorstehend beschrieben bzw. bei einer elektrischen Maschine oder elektrischen Anlage wie vorstehend beschrieben, wobei der Kabeldurchgang mittels einer Dichtungsvorrichtung abgedichtet wird, die als Flächendichtung mit wenigstens zwei sich unter einem spitzen Winkel treffenden und derart eine (durch das Material der Flächendichtung abgedeckte) Öffnung zur Kabeldurchführung bildenden Schlitzen ausgebildet ist, wobei sich das Verfahren durch die Merkmale des Kennzeichens von Anspruch 9 auszeichnet. So wird erfindungsgemäß eine optimierte Abdichtung bzw. Abdeckung der Kabeldurchführung zwischen dem Klemmenkasten bzw. dem Schaltschrank und dem Anlagengehäuse erreicht.

Weitere Vorteile, Merkmale und Einzelheiten ergeben sich anhand des folgenden Ausführungsbeispiels sowie aus den Zeichnungen. Dabei zeigen:
- Figur 1: eine Draufsicht auf eine erfindungsgemäße Dichtungsvorrichtung und
- Figur 2: eine perspektivische Ansicht der Dichtungsvorrichtung der Figur 1.

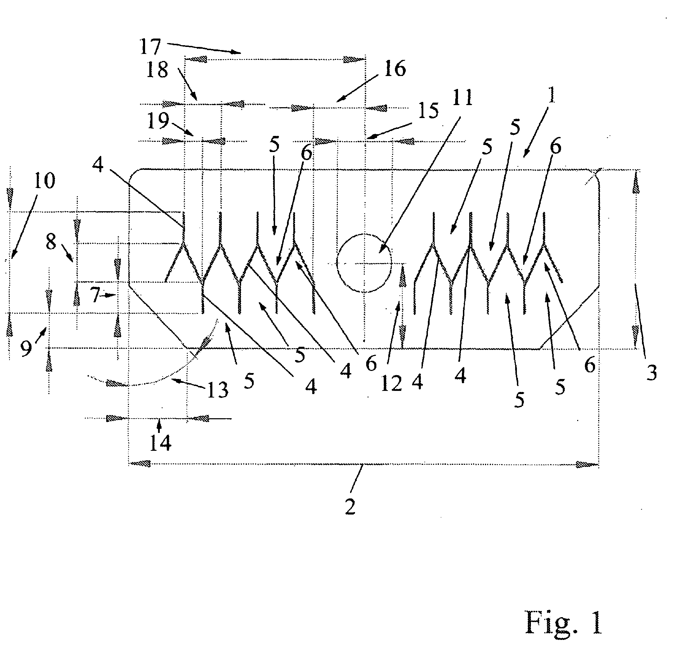

In der Figur 1 ist eine Draufsicht auf eine erfindungsgemäße Dichtungsvorrichtung 1 dargestellt. Die Dichtungsvorrichtung 1 weist eine im Wesentlichen rechteckige Grundform auf, wobei allerdings die in der Darstellung beiden oberen Ecken abgerundet und die unteren Ecken abgeschnitten sind, wodurch eine formmäßige Anpassung an den Kabeldurchführungsbereich zwischen einem hier nicht dargestellten Klemmenkasten und einem Gehäusebereich einer elektrischen Maschine erreicht wird. Die Dichtungsvorrichtung 1 besteht in diesem Ausführungsbeispiel aus Zellkautschuk in der Qualität CR2 auf Neoprenebasis. Die Dichtungsvorrichtung 1 ist einseitig selbstklebend.

Die Dichtungsvorrichtung 1 der Figur 1 weist eine Breite 2 und eine Höhe 3 auf, wobei im vorliegenden Ausführungsbeispiel die Breite 2 etwa dem Dreifachen der Höhe 3 entspricht. Durch in der Fläche der Dichtungsvorrichtung 1 verlaufende Schlitze 4 werden eine fingerförmige Grundform aufweisende Kabeldurchführungsöffnungen 5 definiert, durch die zwischen dem Klemmenkasten und dem Maschinengehäuse zu ziehende Kabel geführt werden können, die hier aus Übersichtlichkeitsgründen nicht dargestellt sind.

Die Schlitzungen der Dichtungsvorrichtung 1 im Fingerdesign, wobei sich in diesem Ausführungsbeispiel jeweils zwei benachbarte Schlitze 4 unter einem spitzen Winkel 6 von 53° treffen, weisen gegenüber rechteckigen Schlitzungen den Vorteil auf, dass die so geschaffenen fingerartigen Öffnungen dafür sorgen, dass sich das Material der Dichtungsvorrichtung 1, aus dem die Finger gebildet sind, beim Durchführen eines Kabels enger ans Kabel anlegt, als dies herkömmlicherweise bei Rechteckschlitzen der Fall wäre. Desweiteren lassen sich die Kabel bzw. Ausführungsleitungen in einer gewünschten Art und Weise seitlich positionieren, da sich die Finger 5 beim Bewegen der Kabel mitbewegen bzw. auf- und zugehen, ohne sich an den Kabeln zu verhaken.

Im hier gezeigten Ausführungsbeispiel verlaufen die Schlitze 4 zunächst in einem unteren Bereich 7 parallel zueinander, um sich dann über den Bereich 8 aufeinander zuzubewegen, bis sie sich in der Spitze schneiden. Dementsprechend bildet der Bereich 8, um im Bild des "Fingerdesigns" zu bleiben, sozusagen den Bereich der Fingerkuppe. Durch das Aufeinanderzulaufen der Schlitze 4 entsteht zwischen den einzelnen Fingerkuppen einer in der Breite 2 verlaufenden Reihe jeweils ein freier Bereich, in den "Fingerkuppen", die von Schlitzungen der gegenüberliegenden Seite gebildet werden (von oben kommend), eingreifen können. Dementsprechend werden ausgehend von einem oberen Bereich gegenüberliegend zu den Fingern, die von den Bereichen 8 ausgehen, die sich an den unteren Bereich 9 anschließen, weitere Finger ausgebildet. Insgesamt erstrecken sich die Schlitzungen bezogen auf die Höhe 3 der Dichtungsvorrichtung 1 über den Bereich 10.

Bei der hier gezeigten Dichtungsvorrichtung 1 ist zusätzlich eine runde Öffnung 11 vorgesehen, deren Mittelpunkt sich im Abstand 12 von der Unterkante der Dichtungsvorrichtung 1 befindet. Im Unterschied zu den Schlitzungen ist das Dichtungsmaterial im Bereich der Öffnung 11 vollständig ausgeschnitten bzw. ausgestanzt. Links und rechts der Öffnung 11 ist in diesem Ausführungsbeispiel über die verbliebene Breite der Dichtungsvorrichtung 1 jeweils eine gleiche Anzahl von Fingerschlitzungen bzw. Kabeldurchführungsöffnungen 5 vorgesehen ist. In anderen Ausführungsbeispielen sind selbstverständlich hiervon abweichende Anordnungen möglich. Die Öffnung 11 hat die Breite 15 und weist, ausgehend von ihrem Mittelpunkt, einen Abstand 16 zum nächstgelegenen Schlitz 4 auf. Vom letzten jeweils parallel zur Höhe 3 verlaufenden Schlitz 4 hat die Öffnung 11, gerechnet von ihrem Mittelpunkt aus, einen Abstand 17. Die einzelnen Finger 5 weisen in den Bereichen, in denen die sie bildenden Schlitze 4 parallel verlaufen, eine Breite 18 auf, die in diesem Ausführungsbeispiel der Höhe der Fingerkuppe, also des Bereichs 8, entspricht. Die Finger 5 sind symmetrisch ausgestaltet, so dass dementsprechend die Breite 19 als Abstand von einer Spitze zum nächsten, parallel zur Höhe 3 verlaufenden Bereich der Hälfte der Breite 18 entspricht.

Die unteren Ecken sind im gegebenen Ausführungsbeispiel unter einem Winkel 13 derart "abgeschnitten", dass mit Blick auf die gesamte Breite 2 ein Fehlbereich der Breite 14 jeweils an der linken unteren und rechten unteren Ecke der Dichtungsvorrichtung 1 entsteht.

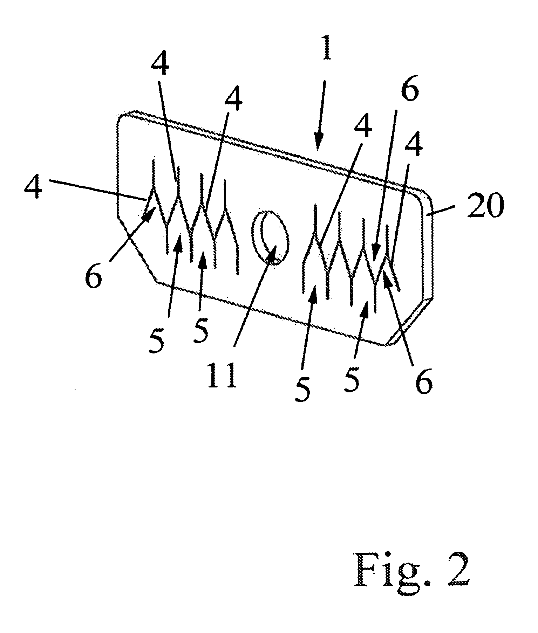

Die Figur 2 zeigt eine perspektivische Ansicht der Dichtungsvorrichtung 1 der Figur 1. In der Figur 2 ist die Dicke 20 der Dichtungsvorrichtung 1 zu erkennen, die beim hier vorliegenden Ausführungsbeispiel im Bereich einiger Millimeter liegt, genauer bei vier Millimetern. In der Figur 2 sind außerdem die Schlitze 4 der Flächendichtung dargestellt, die die fingerförmigen Kabeldurchführungsöffnungen 5 mit dem spitzen Winkeln 6 bilden. Mit der erfindungsgemäßen Abdeckung bzw. Dichtungsvorrichtung 1 wird das Eindringen von Kleinteilen in den Bereich einer Motorwicklung bzw. ins Motorinnere oder in das Gehäuseinnere einer anderen Maschine oder Anlage auch bei verschieden dicken Ausführungsquerschnitten der Kabel, die zwischen dem Klemmenkasten und dem Gehäuse der Maschine oder Anlage zur führen sind, zuverlässig verhindert.

### Bezugszeichenliste

- 1: Dichtungsvorrichtung
- 2: Breite
- 3: Höhe
- 4: Schlitze
- 5: Kabeldurchführungsöffnungen
- 6: Winkel
- 7, 8, 9, 10: Bereiche
- 11: Öffnung
- 12: Abstand
- 13: Winkel
- 14: Breite
- 15: Breite
- 16: Abstand
- 17: Abstand
- 18: Breite
- 19: Breite
- 20: Dicke

## Patentansprüche

1. Dichtungsvorrichtung (1), ausgebildet zum Abdichten eines Kabeldurchgangs zwischen einem Gehäuse einer elektrischen Maschine oder einer elektrischen Anlage und einem Klemmenkasten, wobei die Dichtungsvorrichtung (1) flächig und mit wenigstens zwei sich unter einem spitzen Winkel (6) treffenden und derart eine Öffnung (5) zur Kabeldurchführung bildenden Schlitzen (4) ausgebildet ist, **dadurch gekennzeichnet, dass** wenigstens zwei sich unter einem spitzen Winkel (6) treffende Schlitze (4) zunächst parallel zueinander verlaufen und dann derart in einem stumpfen Winkel abknicken und aufeinander zu laufen, dass sie eine fingerähnliche Form (5) in der Dichtungsvorrichtung (1) definieren.

2. Dichtungsvorrichtung (1) nach Anspruch 1, **dadurch gekennzeichnet, dass** die Dichtungsvorrichtung (1) eine Mehrzahl von Schlitzen (4) aufweist, die wenigstens abschnittsweise und/oder zum Teil parallel zueinander verlaufen, und/oder dass die Dichtungsvorrichtung (1) eine Mehrzahl von Schlitzen (4) derart aufweist, dass durch wenigstens einen Teil der Schlitze (4) mehrere, insbesondere zwei bis zwanzig, parallel und/oder direkt aneinander angrenzende und/oder in entgegen gesetzte Richtungen verlaufende und/oder ineinander eingreifende fingerähnliche Formen (5) in der Dichtungsvorrichtung (1) definiert werden.

3. Dichtungsvorrichtung (1) nach einem der vorangehenden Ansprüche, **dadurch gekennzeichnet, dass** wenigstens zwei sich unter einem spitzen Winkel (6) treffende Schlitze (4) einen Winkel (6) von, zumindest im Wesentlichen, 53 Grad, einschließen und/oder dass wenigstens zwei sich unter einem spitzen Winkel (6) treffende Schlitze (4) einen derartigen Winkel (6) einschließen, dass das oder die durchzuführenden Kabel seitlich positionierbar sind.

4. Dichtungsvorrichtung (1) nach einem der vorangehenden Ansprüche, **dadurch gekennzeichnet, dass** die Dichtungsvorrichtung (1) aus Kautschuk, insbesondere aus Zellkautschuk, vorzugsweise in Neoprenequalität, besteht.

5. Dichtungsvorrichtung (1) nach einem der vorangehenden Ansprüche, **dadurch gekennzeichnet, dass** die Dichtungsvorrichtung (1) selbstklebend, insbesondere einseitig selbstklebend, und/oder für Montagezwecke und/oder mit einer Dicke (20) von einigen Millimetern, insbesondere von vier Millimetern, ausgebildet ist.

6. Dichtungsvorrichtung (1) nach einem der vorangehenden Ansprüche, **dadurch gekennzeichnet, dass** die Dichtungsvorrichtung (1) eine Höhe (3) im Bereich von einigen zehn Millimetern und/oder eine Breite (2) im Bereich von 100 bis 150 Millimetern aufweist und/oder dass im Fall einer durch wenigstens zwei Schlitze (4) definierten fingerähnlichen Form (5) sich die fingerähnliche Form (5), zumindest näherungsweise, über ein Drittel bis die Hälfte der Höhe (3) der Dichtungsvorrichtung (1) erstreckt.

7. Dichtungsvorrichtung (1) nach einem der vorangehenden Ansprüche, **dadurch gekennzeichnet, dass** die Dichtungsvorrichtung (1) eine, zumindest im Wesentlichen, rechteckige Grundform, insbesondere eine rechteckige Grundform mit wenigstens einer abgerundeten und/oder abgeschnittenen Ecke, und/oder wenigstens eine Ausnehmung und/oder Öffnung (11), insbesondere wenigstens eine, zumindest im Wesentlichen, runde Ausnehmung und/oder Öffnung (11), aufweist.

8. Elektrische Maschine, insbesondere Motor, oder elektrische Anlage, mit einem Gehäuse, einem Klemmenkasten und einem Kabeldurchgang zwischen dem Gehäuse und dem Klemmenkasten sowie einer Dichtungsvorrichtung (1), die zum Abdichten des Kabeldurchgangs ausgebildet ist, insbesondere mit einer Dichtungsvorrichtung (1) nach einem der Ansprüche 1 bis 7, wobei die Dichtungsvorrichtung (1) flächig und mit wenigstens zwei sich unter einem spitzen Winkel (6) treffenden und derart eine Öffnung zur Kabeldurchführung bildenden Schlitzen (4) ausgebildet ist, **dadurch gekennzeichnet, dass** wenigstens zwei sich unter einem spitzen Winkel (6) treffende Schlitze (4) zunächst parallel zueinander verlaufen und dann derart in einem stumpfen Winkel abknicken und aufeinander zu laufen, dass sie eine fingerähnliche Form (5) in der Dichtungsvorrichtung (1) definieren.

9. Verfahren zum Abdichten eines Kabeldurchgangs zwischen einem Gehäuse einer elektrischen Maschine oder einer elektrischen Anlage und einem Klemmenkasten mittels einer Dichtungsvorrichtung (1), insbesondere mittels einer Dichtungsvorrichtung (1) nach einem der Ansprüche 1 bis 7 und/oder bei einer elektrischen Maschine oder elektrischen Anlage nach Anspruch 8, wobei der Kabeldurchgang mittels einer Dichtungsvorrichtung (1) abgedichtet wird, die flächig und mit wenigstens zwei sich unter einem spitzen Winkel (6) treffenden und derart eine Öffnung zur Kabeldurchführung bildenden Schlitzen (4) ausgebildet ist **dadurch gekennzeichnet, dass** wenigstens zwei sich unter einem spitzen Winkel (6) treffende Schlitze (4) zunächst parallel zueinander verlaufen und dann derart in einem stumpfen Winkel abknicken und aufeinander zu laufen, dass sie eine fingerähnliche Form (5) in der Dichtungsvorrichtung (1) definieren.

## Claims

1. A sealing device (1) designed to seal a cable passage between a housing of an electrical machine or an electrical installation and a terminal box, the sealing device (1) being designed two-dimensionally and with at least two slots (4) meeting at an acute angle (6) and thus forming an opening (5) through which the cable is passed, **characterised in that** at least two slots (4) meeting at an acute angle (6) first of all extend parallel to one another and then deviate at an obtuse angle and run toward one another such that they define a shape (5) similar to a finger in the sealing device (1).

2. The sealing device (1) according to Claim 1, **characterised in that** the sealing device (1) has a plurality of slots (4) which extend at least in sections and/or partially parallel to one another, and/or that the sealing device (1) has a plurality of slots (4) such that by at least some of the slots (4) a number, in particular two to twenty, of shapes (5) similar to fingers extending parallel and/or directly adjacent to one another and/or in opposite directions and/or engaging with one another are defined in the sealing device (1).

3. The sealing device (1) according to any of the preceding claims, **characterised in that** at least two slots (4) meeting at an acute angle (6) enclose an angle (6) of at least substantially 53 degrees and/or that at least two slots (4) meeting at an acute angle (6) enclose an angle (6) such that the cable or cables to be passed through can be positioned on the side.

4. The sealing device (1) according to any of the preceding claims, **characterised in that** the sealing device (1) is made of rubber, in particular of cellular rubber, preferably of a Neoprene quality.

5. The sealing device (1) according to any of the preceding claims, **characterised in that** the sealing device (1) is self-adhesive, in particular self-adhesive on one side, and/or is designed for assembly purposes and/or with a thickness (20) of several millimetres, in particular of four millimetres.

6. The sealing device (1) according to any of the preceding claims, **characterised in that** the sealing device (1) has a height (3) in the range of several tens of millimetres and/or a width (2) in the range of 100 to 150 millimetres and/or that in the case of a shape (5) similar to a finger defined by at least two slots (4) the shape (5) similar to a finger extends at least approximately over a third to a half of the height (3) of the sealing device (1).

7. The sealing device (1) according to any of the preceding claims, **characterised in that** the sealing device (1) has an at least substantially rectangular basic shape, in particular a rectangular basic shape with at least one rounded and/or cut off corner, and/or at least one recess and/or opening (11), in particular at least one at least substantially round recess and/or opening (11).

8. An electrical machine, in particular a motor, or an electrical installation, comprising a housing, a terminal box and a cable passage between the housing and the terminal box, and a sealing device (1) which is designed to seal the cable passage, in particular comprising a sealing device (1) according to any of Claims 1 to 7, the sealing device (1) being designed two-dimensionally and with at least two slots (4) meeting at an acute angle (6) and thus forming an opening through which the cable is passed, **characterised in that** at least two slots (4) meeting at an acute angle (6) first of all extend parallel to one another and then deviate at an obtuse angle and run toward one another such that they define a shape (5) similar to a finger in the sealing device (1).

9. A method for sealing a cable passage between a housing of an electrical machine or an electrical installation and a terminal box by means of a sealing device (1), in particular by means of a sealing device (1) according to any of Claims 1 to 7 and/or in an electrical machine or electrical installation according to Claim 8, the cable passage being sealed by means of a sealing device (1) which is designed two-dimensionally and is formed with at least two slots (4) meeting at an acute angle (6) and thus forming an opening through which the cable is passed, **characterised in that** at least two slots (4) meeting at an acute angle (6) first of all extend parallel to one another and then deviate at an obtuse angle and run toward one another such that they define a shape (5) similar to a finger in the sealing device (1).

## Revendications

1. Dispositif d'étanchéité (1) conçu pour rendre étanche un passage de câble entre un carter d'une machine électrique ou d'un équipement électrique et une boîte à bornes, le dispositif d'étanchéité (1) étant de forme plate et muni d'au moins deux fentes (4) qui se coupent en formant un angle aigu (6) et forment ainsi une ouverture (5) pour le passage de câble, **caractérisé en ce qu'**au moins deux fentes (4) qui se coupent en formant un angle aigu (6) s'étendent tout d'abord parallèlement l'une à l'autre, puis se coudent selon un angle obtus et se dirigent l'une vers l'autre de telle sorte qu'elles définissent une forme digitiforme (5) dans le dispositif d'étanchéité (1).

2. Dispositif d'étanchéité (1) selon la revendication 1, **caractérisé en ce que** le dispositif d'étanchéité (1) présente une pluralité de fentes (4) qui s'étendent au moins par segments et/ou en partie parallèlement les unes aux autres et/ou **en ce que** le dispositif d'étanchéité (1) présente une pluralité de fentes (4) de telle sorte que, par le biais d'au moins une partie des fentes (4), deux à vingt formes (5) digitiformes qui s'étendent parallèlement et/ou dans des positions directement adjacentes et/ou dans des directions opposées, et/ou qui s'imbriquent les unes dans les autres sont définies dans le dispositif d'étanchéité (1).

3. Dispositif d'étanchéité (1) selon l'une des revendications précédentes, **caractérisé en ce qu'**au moins deux fentes (4) qui se coupent en formant un angle aigu (6) forment un angle (6) d'au moins sensiblement 53° et/ou **en ce qu'**au moins deux fentes (4) qui se coupent en formant un angle aigu (6) forment un angle (6) qui est tel que le câble ou les câbles à passer peuvent(nt) être positionné(s) latéralement.

4. Dispositif d'étanchéité (1) selon l'une des revendications précédentes, **caractérisé en ce que** le dispositif d'étanchéité (1) est fait de caoutchouc, en particulier de caoutchouc cellulaire, de préférence de qualité Néoprène.

5. Dispositif d'étanchéité (1) selon l'une des revendications précédentes, **caractérisé en ce que** le dispositif d'étanchéité (1) est autocollant, en particulier autocollant sur une face et/ou conçu à des fins de montage et/ou avec une épaisseur (20) de quelques millimètres, en particulier de 4 mm.

6. Dispositif d'étanchéité (1) selon l'une des revendications précédentes, **caractérisé en ce que** le dispositif d'étanchéité (1) présente une hauteur (3) de l'ordre de quelques dix millimètres et/ou une largeur (2) comprise dans l'intervalle de 100 à 150 mm et/ou **en ce que**, dans le cas d'une forme (5) digitiforme définie par au moins deux fentes (4), la forme digitiforme (5) s'étend au moins approximativement sur un tiers à la moitié de la hauteur (3) du dispositif d'étanchéité (1).

7. Dispositif d'étanchéité (1) selon l'une des revendications précédentes, **caractérisé en ce que** le dispositif d'étanchéité (1) présente une forme de base au moins sensiblement rectangulaire, en particulier une forme de base rectangulaire munie d'au moins un coin arrondi et/ou tronqué et/ou présente au moins un évidement et/ou une ouverture (11), en particulier un évidement et/ou une ouverture (11) au moins sensiblement rond(e)

8. Machine électrique, en particulier moteur ou équipement électrique comprenant un carter, une boîte à bornes et un passage de câble entre le carter et la boîte à bornes, ainsi qu'un dispositif d'étanchéité (1) qui est conçu pour rendre étanche le passage de câble, en particulier un dispositif d'étanchéité (1) selon l'une des revendications 1 à 7, où le dispositif d'étanchéité (1) est de forme plate et muni d'au moins deux fentes (4) qui se coupent en formant un angle aigu (6) et forment ainsi une ouverture pour le passage de câble, **caractérisé en ce qu'**au moins deux fentes (4) qui se coupent en formant un angle aigu (6) s'étendent tout d'abord parallèlement l'une à l'autre, puis se coudent selon un angle obtus et se dirigent l'une vers l'autre de telle sorte qu'elles définissent une forme digitiforme (5) dans le dispositif d'étanchéité (1).

9. Procédé pour rendre étanche un passage de câble entre un carter d'une machine électrique ou d'un équipement électrique et une boîte à bornes au moyen d'un dispositif d'étanchéité (1), en particulier au moyen d'un dispositif d'étanchéité (1) selon l'une des revendications 1 à 7 et/ou dans une machine électrique ou un équipement électrique selon la revendication 8, où le passage de câble est rendu étanche au moyen d'un dispositif d'étanchéité (1) qui est de forme plate et qui est muni d'au moins deux fentes (4) qui se coupent en formant un angle aigu (6) et forment ainsi une ouverture pour le passage de câble, **caractérisé en ce qu'**au moins deux fentes (4) qui se coupent en formant un angle aigu (6) s'étendent tout d'abord parallèlement l'une à l'autre puis se coudent en formant un angle obtus et se dirigent l'une vers l'autre de telle sorte qu'elles définissent une forme digitiforme (5) dans le dispositif d'étanchéité (1).
